# EUROPEAN PATENT SPECIFICATION

(11) **EP 4 429 370 B1**
(45) Date of publication and mention of the grant of the patent: **02.09.2026**
(21) Application number: 22900201.9
(22) Date of filing: 04.11.2022
(51) Int. Cl.: H04W 72/04, H04L 5/00, H04B 7/185, H04W 84/06

(54) **INFORMATION TRANSMISSION METHOD AND COMMUNICATION APPARATUS**
INFORMATIONSÜBERTRAGUNGSVERFAHREN UND KOMMUNIKATIONSVORRICHTUNG
PROCÉDÉ DE TRANSMISSION D'INFORMATIONS ET APPAREIL DE COMMUNICATION

(30) Priority: 01.12.2021 CN 202111454382
(43) Date of publication of application: 11.09.2024
(73) Proprietor: Huawei Technologies Co., Ltd., Shenzhen, Guangdong 518129 (CN)
(72) Inventor: QIAO, Yunfei, Shenzhen, Guangdong 518129 (CN); WANG, Jun, Shenzhen, Guangdong 518129 (CN)
(74) Representative: Gill Jennings & Every LLP
(86) International application number: PCT/CN2022/129848
(87) International publication number: WO 2023/098396

(56) References cited:
- WO-A1-2017/073465
- CN-A- 109 392 029
- CN-A- 111 867 112
- CN-A- 111 903 174
- CN-A- 113 225 814
- US-A1- 2012 238 203
- US-A1- 2021 314 059

## Description

### TECHNICAL FIELD

The present invention relates to the field of communication technologies, and in particular, to an information transmission method and a communication apparatus.

### BACKGROUND

With development of information technologies, more urgent requirements are imposed on high efficiency, mobility, diversity, and the like of communication. Currently, satellites are playing an irreplaceable role in some important fields, such as space communication, aeronautical communication, and military communication. Satellite communication has characteristics such as a long communication distance, large coverage, and flexible networking, and can provide services for both fixed terminals and mobile terminals.

In a conventional satellite system, a satellite sends telemetry information to a ground station, where the telemetry information includes a satellite posture, a load status, an antenna status, a radio frequency channel status, and the like. The ground station sends telecommand information to the satellite, where the telecommand information includes a device switch command, a posture adjustment command, a status query command, and the like. Currently, interaction is performed between the satellite and the ground station over a dedicated link. To be specific, the satellite transmits the telemetry information to the ground station over a telemetry link, so that a ground control center performs status monitoring based on the telemetry information. The ground station sends telecommand information for a satellite platform to the satellite platform over a telecommand link, and adjusts an operating status of the satellite platform. Currently, a dedicated link is used as a telemetry and control link, and dedicated devices need to be deployed on the platform and the ground station. Correspondingly, a quantity of communication links between devices is also increased, resulting in lower flexibility and higher deployment costs.

US 2012/0238203 Al discloses a method, satellite and system utilizes non-geostationary satellite orbit (NGSO) frequency spectrum in geostationary satellite orbit (GSO) satellite communication in a non-interfering manner.

US 2021/0314059 Al discloses a method of in-flight configuration of satellite pathways to flexibly service terra-link and cross-link traffic in a constellation of non-processed satellites, for example, to facilitate flexible forward-channel and return-channel capacity in a satellite communications system.

### SUMMARY

The present invention is set out in the appended claims.

Embodiments of this application provide an information transmission method and a communication apparatus, so that a transmission resource for transmitting telemetry information or telecommand information can be flexibly determined between a satellite and a ground station, and a dedicated link does not need to be deployed for transmitting the telemetry information or the telecommand information, thereby reducing deployment costs.

According to a first aspect, an embodiment of this application provides an information transmission method. The method may be performed by a first device, or may be performed by a component (for example, a processor, a chip, a chip system, or the like) of a first device. The information transmission method may include:

The first device indicates a first transmission resource to a second device, and sends first information to the second device on the first transmission resource. In this scenario, the first device may be used as a base station to schedule a transmission resource for transmitting the first information. Alternatively, the first device determines a first transmission resource indicated by a second device, and sends first information to the second device on the first transmission resource. In this scenario, the first device may be used as a terminal device, the second device may be used as a base station, and the second device indicates, to the first device, a transmission resource for transmitting the first information.

If the first device is a satellite and the second device is a ground station, the first information is telemetry information. Alternatively, if the first device is a ground station and the second device is a satellite, the first information is telecommand information.

According to the method described in the first aspect, one of the first device and the second device may schedule the transmission resource for transmitting the telemetry information or the telecommand information, and send the telemetry information or the telecommand information on the scheduled transmission resource. Therefore, the transmission resource for transmitting the telemetry information or the telecommand information is flexibly determined, and a dedicated link does not need to be deployed for transmitting the telemetry information or the telecommand information, thereby reducing deployment costs.

In a possible implementation of the first aspect, before the first device determines a first transmission resource indicated by a second device, the method further includes:

The first device receives second information sent by the second device, where the second information indicates the first transmission resource allocated by the second device to the first device.

That the first device determines a first transmission resource indicated by the second device includes:

The first device determines, based on the second information, the first transmission resource indicated by the second device.

In a possible implementation of the first aspect, the second information is scrambled based on a radio network temporary identifier RNTI of the first device or based on an RNTI corresponding to the first information.

In a possible implementation of the first aspect, before the first device receives second information sent by the second device, the method further includes:

The first device receives a first message sent by the second device, where the first message includes third information, and the third information indicates an access resource allocated by the second device to the first device.

The first device accesses the second device based on the access resource.

In a possible implementation of the first aspect, the first message further includes a device identifier of the first device.

In a possible implementation of the first aspect, before the first device receives a first message sent by the second device, the method further includes:

The first device receives, on a target time-frequency resource, a second message sent by the second device, where the second message includes fourth information, and the fourth information indicates a time-frequency resource position at which the first message is located.

That the first device receives a first message sent by the second device includes:

The first device receives, based on the fourth information, the first message sent by the second device.

In a possible implementation of the first aspect, the target time-frequency resource is a time-frequency resource that is semi-statically allocated or is determined based on the RNTI of the first device.

In a possible implementation of the first aspect, that the first device indicates a first transmission resource to a second device includes:

The first device sends a third message to the second device, where the third message includes fifth information, and the fifth information indicates the first transmission resource allocated by the first device to the second device.

In a possible implementation of the first aspect, the third message further includes a device identifier of the second device and/or information about a format of the first information.

In a possible implementation of the first aspect, before the first device sends a third message to the second device, the method further includes:

The first device sends, on a target time-frequency resource, a fourth message to the second device, where the fourth message includes sixth information, and the sixth information indicates a time-frequency resource position at which the third message is located.

In a possible implementation of the first aspect, the target time-frequency resource is a time-frequency resource that is semi-statically allocated or is determined based on an RNTI of the second device.

In a possible implementation of the first aspect, the first information is encapsulated in a media access control packet data unit MAC PDU.

In a possible implementation of the first aspect, the MAC PDU includes a MAC header and a MAC control element. The MAC header includes a logical channel identifier. A value of the logical channel identifier is a preset value, and the preset value indicates that the MAC control element includes the first information.

In a possible implementation of the first aspect, the MAC header further includes indication information, the indication information indicates the format of the first information, and the format of the first information is associated with a length of a bit occupied by the first information.

In a possible implementation of the first aspect, the first information is generated at a MAC layer of the first device, or is obtained by a MAC layer of the first device from a newly added logical channel, and the newly added logical channel is used to carry the first information.

In a possible implementation of the first aspect, the first information is carried on a first transmission channel or a second transmission channel, the first transmission channel includes a downlink shared channel DL-SCH or an uplink shared channel UL-SCH, and the second transmission channel is a newly added transmission channel for transmitting the first information.

In a possible implementation of the first aspect, the first information is carried on a first physical channel or a second physical channel, the first physical channel includes a physical uplink shared channel PUSCH or a physical downlink shared channel PDSCH, and the second physical channel is a newly added physical channel for transmitting the first information.

According to a second aspect, an embodiment of this application provides a communication apparatus, including modules or units configured to perform the method in the first aspect.

According to a third aspect, an embodiment of this application provides a communication apparatus, including a processor. The processor is coupled to a memory, and may be configured to execute instructions in the memory, to implement the method in the first aspect. Optionally, the communication apparatus further includes the memory. Optionally, the communication apparatus further includes a communication interface, and the processor is coupled to the communication interface.

According to a fourth aspect, an embodiment of this application provides a processor, including an input circuit, an output circuit, and a processing circuit. The processing circuit is configured to receive a signal through the input circuit and transmit a signal through the output circuit, so that the processor performs the method in the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received through the input circuit may be received and input by using, for example, but not limited to, a receiver. A signal output by the output circuit may be output to, for example, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

According to a fifth aspect, an embodiment of this application provides a processing apparatus, including a processor and a memory. The processor is configured to read instructions stored in the memory, receive a signal by using a receiver, and transmit a signal by using a transmitter, to perform the method in the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that a related data exchange process, for example, sending a CN PDB, may be a process of outputting a CN PDB from a processor, and receiving the CN PDB may be a process of receiving the CN PDB by the processor. Specifically, data output by the processor may be output to the transmitter, and input data received by the processor may be from the receiver. The transmitter and the receiver may be collectively referred to as a transceiver.

The processing apparatus in the fifth aspect may be one or more chips. The processor in the processing apparatus may be implemented through hardware, or may be implemented through software. When the processor is implemented through hardware, the processor may be a logic circuit, an integrated circuit, or the like. When the processor is implemented through software, the processor may be a general-purpose processor, and is implemented by reading software code stored in the memory. The memory may be integrated into the processor, or may be located outside the processor and exist independently.

According to a sixth aspect, an embodiment of this application provides a computer program product. The computer program product includes a computer program (which may also be referred to as code or instructions). When the computer program is run, a computer is enabled to perform the method in the first aspect.

According to a seventh aspect, an embodiment of this application provides a readable storage medium. The readable storage medium stores a computer program (which may also be referred to as code or instructions). When the computer program runs on a computer, the method in the first aspect is implemented.

According to an eighth aspect, an embodiment of this application provides a communication system, including a first device and a second device.

According to a ninth aspect, a chip system is provided. The chip system includes a processor and an interface circuit. The processor is configured to invoke, from a memory, a computer program (which may also be referred to as code or instructions) stored in the memory and run the computer program, to implement functions in the first aspect. In a possible design, the chip system further includes the memory, and the memory is configured to store necessary program instructions and data. The chip system may include a chip, or may include a chip and another discrete component.

### BRIEF DESCRIPTION OF DRAWINGS

FIG. 1 is a diagram of an architecture of a satellite communication system according to this application;
FIG. 2 is a schematic flowchart of an information transmission method according to this application;
FIG. 3a is a schematic diagram of a logical channel for transmitting telemetry and control information according to this application;
FIG. 3b is a schematic diagram of another logical channel for transmitting telemetry and control information according to this application;
FIG. 3c is a schematic diagram of still another logical channel for transmitting telemetry and control information according to this application;
FIG. 3d is a schematic diagram of still another logical channel for transmitting telemetry and control information according to this application;
FIG. 3e is a schematic diagram of still another logical channel for transmitting telemetry and control information according to this application;
FIG. 4 is a schematic block diagram of a communication apparatus according to an embodiment of this application;
FIG. 5 is a schematic block diagram of another communication apparatus according to an embodiment of this application; and
FIG. 6 is a schematic diagram of a structure of a chip according to an embodiment of this application.

### DESCRIPTION OF EMBODIMENTS

The technical solutions in embodiments of this application may be applied to a satellite communication system. In the satellite communication system, a ground mobile terminal UE accesses a network through 5G new radio, and a 5G base station may be deployed on a satellite, and is connected to a ground core network over a radio link. In addition, there is a radio link between satellites, to perform signaling interaction and user data transmission between base stations.

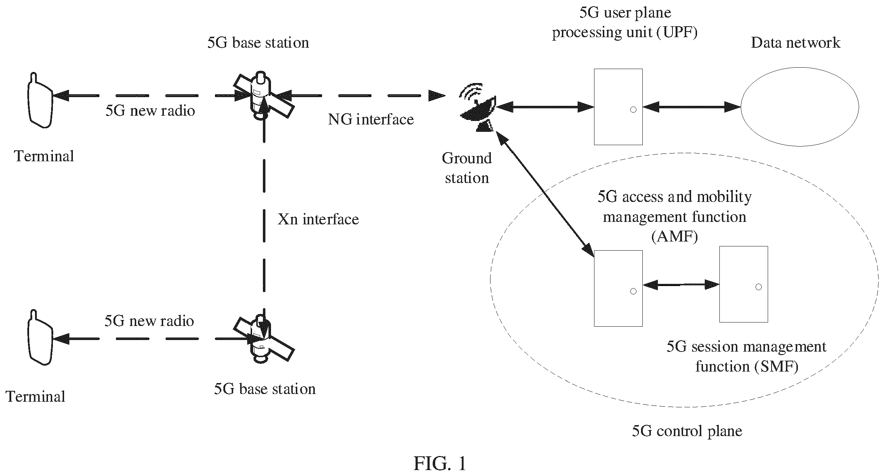

The following describes various network elements and interfaces of the network elements in the satellite communication system with reference to FIG. 1.

A terminal is a mobile device that supports 5G new radio, for example, typically a mobile phone, a pad, or another mobile device. The terminal may access a satellite network through an air interface and initiate services such as a call and internet access.

A 5G base station mainly provides a wireless access service, schedules a radio resource for an access terminal, and provides a reliable wireless transmission protocol and a reliable data encryption protocol.

A 5G core network provides services such as user access control, mobility management, session management, user security authentication, and accounting. The 5G core network includes a plurality of functional units, and may be divided into a control plane functional entity and a data plane functional entity. An access and mobility management unit (AMF) is responsible for user access management, security authentication, and mobility management. A user plane unit (UPF) is responsible for managing transmission of user plane data, traffic statistics, and other functions.

A ground station is responsible for forwarding signaling and service data between a satellite base station and a 5G core network.

5G new radio is a radio link between a terminal and a base station.

An Xn interface is an interface between 5G base stations, and is mainly used for signaling exchange like handover.

An NG interface is an interface between a 5G base station and a 5G core network, and is mainly used for exchange of NAS signaling of the core network and user service data.

In this application, the 5G base station may also be deployed on a ground station, and a satellite is used as a terminal device.

It should be understood that embodiments of this application are not limited to being applied to a system architecture shown in FIG. 1. For example, a communication system to which an information transmission method according to embodiments of this application may be applied may include more or fewer network elements or devices. Devices or network elements in FIG. 1 may be hardware, or may be software obtained through functional division or a combination of the hardware and the software. The devices or the network elements in FIG. 1 may communicate with each other by using another device or network element.

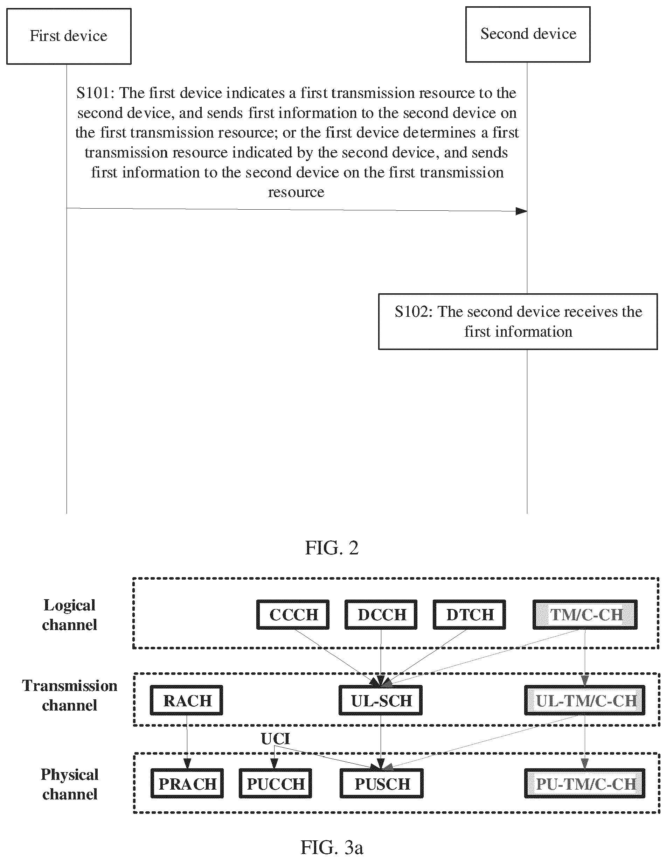

FIG. 2 is a schematic flowchart of an information transmission method according to an embodiment of this application. As shown in FIG. 2, the method may include S101 and S102. It may be understood that the information transmission method according to this embodiment of this application includes, but is not limited to, the following steps.

S101: A first device indicates a first transmission resource to a second device, and sends first information to the second device on the first transmission resource; or a first device determines a first transmission resource indicated by a second device, and sends first information to the second device on the first transmission resource.

S102: The second device receives the first information.

If the first device is a satellite and the second device is a ground station, the first information is telemetry (Telemetry, TM) information. Alternatively, if the first device is a ground station and the second device is a satellite, the first information is telecommand (Telecommand, TC) information.

In this embodiment of this application, the first device and the second device may communicate with each other through an air interface.

In a possible implementation, the first device may be used as a terminal, and the second device is used as a base station. The first device determines the first transmission resource indicated by the second device, and sends the first information to the second device on the first transmission resource indicated by the second device. If the first device is the satellite and the second device is the ground station, the first information is the telemetry information. Alternatively, if the first device is the ground station and the second device is the satellite, the first information is the telecommand information. The satellite sends the telemetry information to the ground station, where the telemetry information includes a satellite posture, a load status, an antenna status, a radio frequency channel status, and the like. The ground station sends the telecommand information to the satellite, where the telecommand information includes a device switch command, a posture adjustment command, a status query command, and the like.

Before the first device determines the first transmission resource indicated by the second device, the first device receives second information sent by the second device. The second information may be control information. The second information may be scrambled based on a radio network temporary identifier (Radio Network Temporary Identifier, RNTI) of the first device or based on an RNTI corresponding to the first information. For example, if the first information is the telemetry information, the RNTI is an RNTI corresponding to the telemetry information, that is, a TM-RNTI. Alternatively, if the first information is the telecommand information, the RNTI is an RNTI corresponding to the telecommand information, that is, a TC-RNTI. Both the TM-RNTI and the TC-RNTI may be selected from reserved RNTIs (FFF 0 to FFF D). The second information indicates the first transmission resource allocated by the second device to the first device. The first device determines, based on the second information, the first transmission resource indicated by the second device. If the second information is scrambled based on the corresponding RNTI, the first device may obtain the second information through descrambling based on the corresponding RNTI, to determine, based on the second information, the first transmission resource indicated by the second device.

Optionally, before the first device receives the second information sent by the second device, the first device further needs to access the second device. Specifically, the first device receives a first message sent by the second device. The first message may be a start message. The first message includes third information. The third information indicates an access resource allocated by the second device to the first device. The first device determines the access resource based on the third information, and accesses the second device by using the access resource. Optionally, the first message may include device identifiers of a plurality of devices and corresponding access resources. The identifiers of the plurality of devices include a device identifier of the first device.

Optionally, before the first device receives the first message sent by the second device, the first device receives, on a target time-frequency resource, a second message sent by the second device. The second message includes fourth information. The fourth information may be control information. The fourth information indicates a time-frequency resource position at which the first message is located. The fourth information may be scrambled based on the radio network temporary identifier (Radio Network Temporary Identifier, RNTI) of the first device or based on the RNTI corresponding to the first information. The first device receives, at the time-frequency resource position indicated by the fourth information, the first message sent by the second device. The target time-frequency resource may be a time-frequency resource that is semi-statically allocated or may be a time-frequency resource determined based on the RNTI of the first device. A principle for semi-static allocation may be that a target time-frequency resource position takes effect when a preset relative position relationship is met between the first device and the second device.

In another possible implementation, the first device may be used as a base station, and the second device may be used as a terminal. The first device may indicate the first transmission resource to the second device, and the first device sends the first information to the second device on the indicated first transmission resource. If the first device is the satellite and the second device is the ground station, the first information is the telemetry information. Alternatively, if the first device is the ground station and the second device is the satellite, the first information is the telecommand information.

The first device may send a third message to the second device. The third message may be start information. The third message includes fifth information. The fifth information indicates the first transmission resource allocated by the first device to the second device. The fifth information may be control information. Optionally, the fifth information may include device identifiers of a plurality of devices and corresponding transmission resources. The device identifiers of the plurality of devices include a device identifier of the second device. Optionally, the third message may further include information about a format of the first information, so that the second device parses the first information.

Optionally, before the first device sends the third message to the second device, the first device sends, on a target time-frequency resource, a fourth message to the second device. The fourth message includes sixth information. The sixth information may be control information. The sixth information indicates a time-frequency resource position at which the third message is located, so that the second device detects the third message at the corresponding time-frequency resource position. The sixth information may be scrambled based on a radio network temporary identifier (Radio Network Temporary Identifier, RNTI) of the second device or based on an RNTI corresponding to the first information. The second device receives, at the time-frequency resource position indicated by the sixth information, the third message sent by the first device. The target time-frequency resource may be a time-frequency resource that is semi-statically allocated or may be a time-frequency resource determined based on the RNTI of the second device. A principle for semi-static allocation may be that a target time-frequency resource position takes effect when a preset relative position relationship is met between the second device and the first device.

A process of transmitting the first information between the first device and the second device is described in the foregoing two possible implementations. The following uses four optional specific implementations as examples for description.

Implementation 1: The satellite is used as a base station, the ground station is used as a terminal, and the satellite sends the telemetry information to the ground station. Optionally, the following steps are included.

Step 1: The satellite sends control information on a TM-Occasion.

The TM-Occasion may be semi-statically allocated, and a principle for allocation may be that a reserved TM-Occasion takes effect when a preset relative position relationship is met between the satellite and the ground station.

The control information indicates a time-frequency resource position carrying a telemetry start message. The control information may be scrambled based on a TM-RNTI corresponding to the telemetry information. Optionally, if a start message for a ground station A is scheduled, the control information may alternatively be scrambled based on an RNTI of the ground station A. A time-frequency resource of the TM-Occasion may be determined based on the RNTI of the ground station A.

The control information may be defined as DCI_TM, to indicate a time-frequency resource position of the telemetry information, a format of the telemetry information, and the like.

Step 2: The ground station detects the control information on the TM-Occasion based on the corresponding RNTI; and when the control information is detected, extracts the start message based on the time-frequency resource position indicated by the control information, where configuration information in the start message may include the following content: a ground station ID for identifying a target ground station of the start message; and the format of the telemetry information for identifying a manner of reading the sent telemetry information, where the format is predefined, and telemetry information fields included in telemetry information of different formats are different. An example is provided below.

| | | | | | | | |
|---|---|---|---|---|---|---|---|
| Format A | Calibration power of each receive channel | Calibration power of each transmit channel | Amplitude error of each receive channel | Amplitude error of each transmit channel | Transmit antenna power-on/off status | Transmit component power-on/off status | ... |
| Format B | Platform posture information | Platform track information | Platform time information | Operating temperature of load A | Operating temperature of load B | ... | |
| ... | | | | | | | |

The configuration information in the start message may further include the time-frequency resource position of the telemetry information, and the like.

For example, the start message may include a plurality of pieces of configuration information for a plurality of ground stations. An example is provided below.

| | | | |
|---|---|---|---|
| Config 1 | Ground station ID_1 | Format A (format A) | Time_Frequency_Resource 1 (time-frequency resource 1) |
| Config 2 | Ground station ID_2 | Format B (format B) | Time_Frequency_Resource 2 (time-frequency resource 2) |
| | ... | | |

Step 3: The ground station extracts the corresponding telemetry information based on a time-frequency resource indicated in the start message.

Implementation 2: The satellite is used as a base station, the ground station is used as a terminal, and the ground station sends the telecommand information to the satellite. Optionally, the following steps are included.

Step 1: The satellite sends control information on a TC-Occasion.

The TC-Occasion may be semi-statically allocated, and a principle for allocation may be that a reserved TC-Occasion takes effect when a preset relative position relationship is met between the satellite and the ground station.

The control information indicates a time-frequency resource position carrying a telecommand start message. The control information may be scrambled based on a TC-RNTI corresponding to the telecommand information. Optionally, the satellite may alternatively scramble, based on an RNTI of the ground station, the control information, for example, DCI_1_0, to trigger the ground station to perform a PDCCH-order RACH.

Step 2: The ground station detects the control information on the TC-Occasion based on the RNTI of the ground station or the TC-RNTI; and when the control information is detected, extracts the start message based on the time-frequency resource position that is of the start message and that is indicated by the control information, where the start message may include: a ground station ID; and an uplink access resource (including a time-frequency resource and a preamble) that is allocated to the ground station and that is used by the ground station to complete uplink access with the satellite on the resource and report a format of the telecommand information that needs to be sent.

The satellite allocates an uplink transmission resource to the ground station based on the format that is of the telecommand information and that is reported by the ground station, and indicates, based on control information DCI_TC, the uplink transmission resource allocated to the ground station, where the control information may be scrambled based on a C-RNTI of the ground station, and is detected and extracted by the ground station.

Step 3: The ground station sends the telecommand information to the satellite on the allocated uplink transmission resource.

Implementation 3: The ground station is used as a base station, the satellite is used as a terminal, and the satellite sends the telemetry information to the ground station. Optionally, the following steps are included.

Step 1: The ground station sends control information on a TM-Occasion.

The TM-Occasion may be semi-statically allocated, and a principle for allocation may be that a reserved TM-Occasion takes effect when a preset relative position relationship is met between the satellite and the ground station.

The control information indicates a time-frequency resource position carrying a telemetry start message. The control information may be scrambled based on a TM-RNTI corresponding to the telemetry information. Optionally, the ground station may alternatively scramble, based on an RNTI of the satellite, the control information, to trigger the satellite to perform a PDCCH-order RACH.

Step 2: The satellite detects the control information on the TM-Occasion based on the RNTI of the satellite or the TM-RNTI; and when the control information is detected, extracts the start message based on the time-frequency resource position that is of the start message and that is indicated by the control information, where the start message may include configuration information, and the configuration information may include the following content:
a satellite ID for identifying a target satellite of the start message;
a format that is of the telemetry information and that needs to be reported, where the format is predefined, and telemetry information fields included in telemetry information of different formats are different; and
an uplink access resource (including a time-frequency resource and a preamble) that is allocated to the satellite and that is used by the satellite to complete uplink access with the ground station on the resource and apply for a transmission resource.

Optionally, the start message may include a plurality of pieces of configuration information corresponding to a plurality of satellites, as shown in Table 1.

**Table 1**

| | | | |
|---|---|---|---|
| Config 1 | Satellite ID_1 | Format A | RACH_Resource 1 (access resource 1) |
| Config 2 | Satellite ID_2 | Format B | RACH_Resource 2 (access resource 2) |
| | ... | | |

Step 3: The ground station obtains an uplink resource request of the satellite, allocates an uplink transmission resource based on the uplink resource request of the satellite, and indicates, based on control information DCI_TM, the uplink transmission resource allocated to the satellite, where the control information may be scrambled based on a C-RNTI of the satellite, and is detected and extracted by the satellite.

Step 4: The satellite sends the telemetry information to the ground station on the allocated uplink transmission resource.

Implementation 4: The ground station is used as a base station, the satellite is used as a terminal, and the ground station sends the telecommand information to the satellite. Optionally, the following steps are included.

Step 1: The ground station sends control information on a TC-Occasion.

The TC-Occasion may be semi-statically allocated, and a principle for allocation may be that a reserved TC-Occasion takes effect when a preset relative position relationship is met between the satellite and the ground station.

The control information indicates a time-frequency resource position carrying a telecommand start message. The control information may be scrambled based on a TC-RNTI corresponding to the telecommand information. Optionally, the control information may alternatively be scrambled based on an RNTI of the satellite. A time-frequency resource of the TM-Occasion may be determined based on the RNTI of the satellite.

Step 2: The satellite detects the control information on the TC-Occasion based on the corresponding RNTI; and when the control information is detected, extracts the start message based on the time-frequency resource position indicated by the control information, where configuration information in the start message may include the following content: a satellite ID for identifying a target satellite of the start message; a format of the telecommand information for identifying a manner of reading the sent telecommand information, where the format is predefined, and telecommand information fields included in telecommand information of different formats are different; a time-frequency resource position of the telecommand information, and the like.

The start message may include a plurality of pieces of configuration information corresponding to a plurality of satellites, as shown in Table 2.

**Table 2**

| | | | |
|---|---|---|---|
| Config 1 | Satellite ID_1 | Format A | Time_Frequency_Resource 1 (time-frequency resource 1) |
| Config 2 | Satellite ID_2 | Format B | Time_Frequency_Resource 2 (time-frequency resource 2) |
| | ... | | |

Step 3: The satellite extracts corresponding telecommand information based on a time-frequency resource position indicated in the start message.

The foregoing describes the specific transmission process of transmitting the first information (the telemetry information or the telecommand information) between the satellite and the ground station. The following describes generation and encapsulation manners of the first information by using examples.

For example, as shown in FIG. 3a, a logical channel TM/C-CH may be newly added to transmit first information generated at an upper layer. Optionally, a transmission channel UL-TM/C-CH may be newly added to transmit information from the TM/C-CH. The TM/C-CH may be further multiplexed and mapped to a UL-SCH with another logical channel. Optionally, a physical channel PU-TM/C-CH may be newly added to transmit information from the UL-TM/C-CH. The UL-TM/C-CH may be further multiplexed and mapped to a PUSCH with another transmission channel.

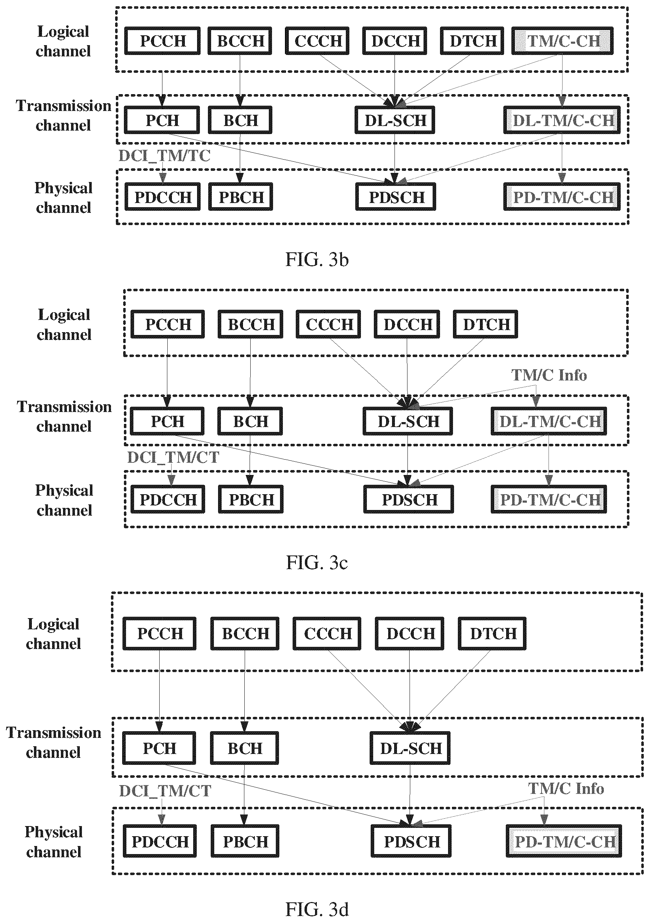

For example, as shown in FIG. 3b, a logical channel TM/C-CH may be newly added to transmit first information generated at an upper layer. Optionally, a transmission channel DL-TM/C-CH may be newly added to transmit information from the TM/C-CH. The TM/C-CH may be further multiplexed and mapped to a DL-SCH with another logical channel. Optionally, a physical channel PD-TM/C-CH may be newly added to transmit information from the DL-TM/C-CH. The DL-TM/C-CH may be further multiplexed and mapped to a PDSCH with another transmission channel.

Optionally, DCI_TM/TC may be newly added to schedule a transmission resource related to the first information.

For example, as shown in FIG. 3c, first information TM/C Info may be generated at a MAC layer and mapped to a DL-SCH or a newly added DL-TM/C-CH. Further, the DL-TM/C-CH may be mapped to a PD-TM/C-CH or a PDSCH.

Optionally, the first information TM/C Info may be generated at the MAC layer or may be mapped to a UL-SCH or a UL-TM/C-CH. Further, the UL-TM/C-CH is mapped to a PU-TM/C-CH.

For example, as shown in FIG. 3d, first information TM/C Info may be generated at a physical layer and mapped to a PDSCH or a newly added PD-TM/C-CH.

Optionally, the first information TM/C Info may be generated at the physical layer and mapped to a PUSCH or a newly added PU-TM/C-CH.

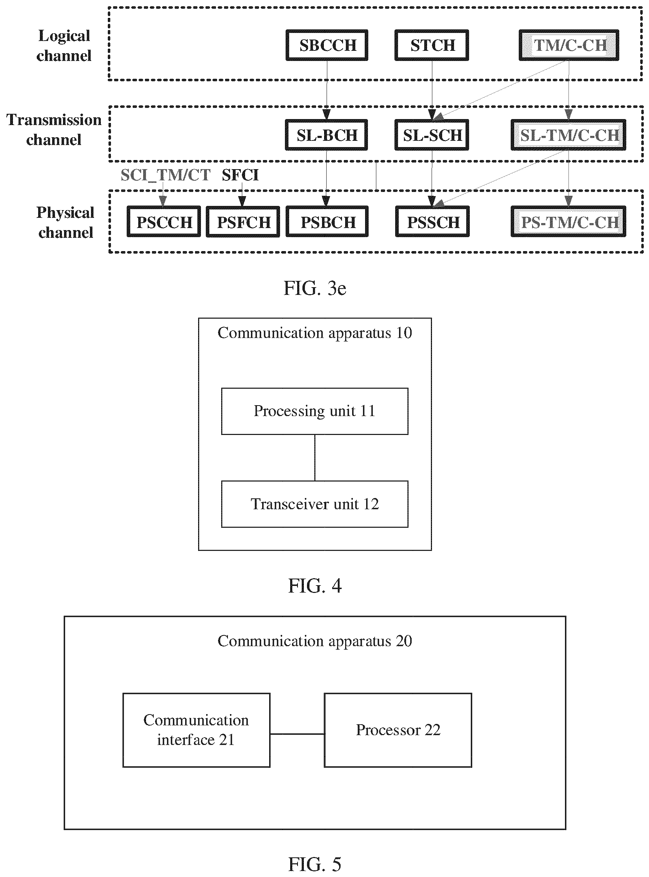

In some embodiments, when a load of the satellite has a terminal module, telemetry and control information may alternatively be transmitted between satellites over a sidelink. Correspondingly, a channel design of each layer is shown in FIG. 3e. The telemetry and control information may be carried by a newly added logical channel TM/C-CH, and the newly added logical channel TM/C-CH may be mapped to a transmission channel SL-SCH or a newly added transmission channel SL-TM/C-CH. The newly added transmission channel SL-TM/C-CH may be mapped to a newly added physical channel PS-TM/C-CH or a PSSCH.

Correspondingly, in this scenario, the telemetry and control information may be further generated at a higher layer, a MAC layer, or a physical layer.

Further, the following describes an encapsulation format of the first information (the telemetry information or the telecommand information) at the MAC layer by using examples. Specifically, a related design of a MAC PDU in which the first information is carried by using a DL-SCH or a UL-SCH at the MAC layer is as follows:

The MAC PDU includes a MAC header and a MAC control element. The MAC header includes a logical channel identifier. A value of the logical channel identifier is a preset value, and the preset value indicates that the MAC control element includes the first information. Because LCID values 35 to 46 in the DL-SCH are not used, a value may be selected as the preset value. For example, LCID=35 indicates the telemetry information. Similarly, LCID=35 in the UL-SCH indicates the telecommand information. Table 3 shows specific meanings of the LCID values.

**Table 3**

| Codepoint/Index | LCID values |
|---|---|
| 0 | CCCH |
| 1-32 | logical channel identifier (logical channel identifier) |
| 33 | Extended logical channel ID field (two-octet eLCID field) (extended |
| | logical channel identifier field) |
| 34 | Extended logical channel ID field (one-octet eLCID field) (extended logical channel identifier field) |
| 35-46 | Reserved (reserved) |
| 47 | Recommended bit rate (recommended bit rate) |
| ... | ... |
| 63 | Padding (padding) |

Optionally, a value may alternatively be selected from LCIDs 1 to 32 as the preset value. In this case, the LCID depends on a configuration of an RRC, that is, the preset value is configured by using the RRC.

Optionally, in a MAC PDU, a MAC CE/SDU with a fixed header may be used for indicating the first information, for example, the telemetry information. As shown in Table 4, a MAC PDU with a fixed header may be used to carry the first information.

**Table 4**

| | |
|---|---|
| R | LCID (for example, 35, indicating that a control unit is about the telemetry information) |
| Calibration power of each receive channel (8 bits) | |
| Calibration power of each transmit channel (8 bits) | |
| Amplitude error of each receive channel (8 bits) | |
| Amplitude error of each transmit channel (8 bits) | |
| Phase error of each receive channel (8 bits) | |
| Phase error of each transmit channel (8 bits) | |
| ... | |

Optionally, in a MAC PDU, a MAC CE/SDU with a variable header may be used for indicating the first information. For example, Table 5 is a schematic diagram in which the MAC CE/SDU with the variable header indicates the first information. L may indicate a format of the telemetry information (different lengths of bits of the first information correspond to different formats). The format is predefined. Information fields included in telecommand information of different formats are different, and may be indicated based on indication information L.

**Table 5**

| | | |
|---|---|---|
| R | F (0, indicating that L is 8 bits) | LCID (for example, 35, indicating that a control unit is about the telemetry information) |
| L (8 bits, indicating a format) | | |
| Calibration power of each receive channel (8 bits) | | |
| Calibration power of each transmit channel (8 bits) | | |
| Platform posture information (8 bits) | | |
| Platform time information (8 bits) | | |
| Platform track information (8 bits) | | |
| ... | | |

In this embodiment of this application, the first device indicates the first transmission resource to the second device, and sends the first information to the second device on the first transmission resource. Alternatively, the first device determines the first transmission resource indicated by the second device, and sends the first information to the second device on the first transmission resource. If the first device is the satellite and the second device is the ground station, the first information is the telemetry information. Alternatively, if the first device is the ground station and the second device is the satellite, the first information is the telecommand information. According to this application, a transmission resource for transmitting the telemetry information or the telecommand information can be flexibly determined between the satellite and the ground station, and a dedicated link does not need to be deployed for transmitting the telemetry information or the telecommand information, thereby reducing deployment costs.

The foregoing describes in detail the method according to embodiments of this application with reference to FIG. 2. The following describes in detail an apparatus according to embodiments of this application with reference to FIG. 4 to FIG. 6.

It may be understood that, to implement the functions in the foregoing embodiments, the first device includes a corresponding hardware structure and/or a corresponding software module for performing the functions. A person skilled in the art should be easily aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions.

FIG. 4 is a schematic block diagram of a communication apparatus according to an embodiment of this application. As shown in FIG. 4, a communication apparatus 10 may include a processing unit 11 and a transceiver unit 12. The processing unit 11 and the transceiver unit 12 may be software, hardware, or a combination of software and hardware.

The transceiver unit 12 may include a sending unit and a receiving unit. The sending unit is configured to implement a sending function, and the receiving unit is configured to implement a receiving function. The transceiver unit 12 may implement the sending function and/or the receiving function. The transceiver unit may alternatively be described as a communication unit.

Optionally, the transceiver unit 12 may be configured to receive information sent by another apparatus, and may be further configured to send information to the another apparatus. The processing unit 11 may be configured to perform internal processing on the apparatus.

The communication apparatus 10 may correspond to the first device in the foregoing method embodiment in FIG. 2. For example, the communication apparatus 10 may be the first device, or may be a chip in the first device. The communication apparatus 10 may include units configured to perform the operations performed by the first device in the foregoing method embodiment in FIG. 2. In addition, the units in the communication apparatus 10 are respectively configured to implement the operations performed by the first device in the foregoing method embodiment in FIG. 2.

For example, the transceiver unit 12 is configured to indicate a first transmission resource to a second device, and send first information to the second device on the first transmission resource. Alternatively, the processing unit 11 is configured to determine a first transmission resource indicated by a second device, and the transceiver unit 12 is configured to send first information to the second device on the first transmission resource.

If the first device is a satellite and the second device is a ground station, the first information is telemetry information. Alternatively, if the first device is a ground station and the second device is a satellite, the first information is telecommand information.

Optionally, the transceiver unit 12 is further configured to receive second information sent by the second device, where the second information indicates the first transmission resource allocated by the second device to the first device.

The processing unit 11 is specifically configured to determine, based on the second information, the first transmission resource indicated by the second device.

Optionally, the second information is scrambled based on a radio network temporary identifier RNTI of the first device or based on an RNTI corresponding to the first information.

Optionally, the transceiver unit 12 is further configured to receive a first message sent by the second device, where the first message includes third information, and the third information indicates an access resource allocated by the second device to the first device.

The transceiver unit 12 is further configured to access the second device based on the access resource.

Optionally, the first message further includes a device identifier of the first device.

Optionally, the transceiver unit 12 is further configured to receive, on a target time-frequency resource, a second message sent by the second device, where the second message includes fourth information, and the fourth information indicates a time-frequency resource position at which the first message is located.

The transceiver unit 12 is further configured to receive, based on the fourth information, the first message sent by the second device.

Optionally, the target time-frequency resource is a time-frequency resource that is semi-statically allocated or is determined based on the RNTI of the first device.

Optionally, the transceiver unit 12 is further configured to send a third message to the second device, where the third message includes fifth information, and the fifth information indicates the first transmission resource allocated by the first device to the second device.

Optionally, the third message further includes a device identifier of the second device and/or information about a format of the first information.

Optionally, the transceiver unit 12 is further configured to send, on a target time-frequency resource, a fourth message to the second device, where the fourth message includes sixth information, and the sixth information indicates a time-frequency resource position at which the third message is located.

Optionally, the target time-frequency resource is a time-frequency resource that is semi-statically allocated or is determined based on an RNTI of the second device.

Optionally, the first information is encapsulated in a media access control packet data unit MAC PDU.

Optionally, the MAC PDU includes a MAC header and a MAC control element. The MAC header includes a logical channel identifier. A value of the logical channel identifier is a preset value, and the preset value indicates that the MAC control element includes the first information.

Optionally, the MAC header further includes indication information, the indication information indicates the format of the first information, and the format of the first information is associated with a length of a bit occupied by the first information.

Optionally, the first information is generated at a MAC layer of the first device, or is obtained by a MAC layer of the first device from a newly added logical channel, and the newly added logical channel is used to carry the first information.

Optionally, the first information is carried on a first transmission channel or a second transmission channel, the first transmission channel includes a downlink shared channel DL-SCH or an uplink shared channel UL-SCH, and the second transmission channel is a newly added transmission channel for transmitting the first information.

Optionally, the first information is carried on a first physical channel or a second physical channel, the first physical channel includes a physical uplink shared channel PUSCH or a physical downlink shared channel PDSCH, and the second physical channel is a newly added physical channel for transmitting the first information.

It should be understood that when the communication apparatus 10 is a chip configured in the first device, the transceiver unit 12 in the communication apparatus 10 may be an input/output interface.

It should be understood that when the communication apparatus 10 is the first device, the transceiver unit 12 in the communication apparatus 10 may correspond to a communication interface 21 shown in FIG. 5, and the processing unit 11 may correspond to a processor 22 shown in FIG. 5.

FIG. 5 is a schematic diagram of a structure of a communication apparatus according to an embodiment of this application. It should be understood that a communication apparatus 20 shown in FIG. 5 is merely an example. The communication apparatus in this embodiment of this application may further include another component, include a component with a function similar to that of each component in FIG. 5, or do not necessarily need to include all components in FIG. 5.

The communication apparatus 20 includes a communication interface 21 and at least one processor 22.

The communication apparatus 20 may correspond to a first device. The communication interface 21 is configured to receive and send a signal, and the at least one processor 22 executes program instructions, so that the communication apparatus 20 implements a corresponding procedure of the method performed by the first device in the foregoing method embodiment.

The communication apparatus 20 may correspond to the first device in the foregoing method embodiment in FIG. 2. For example, the communication apparatus 20 may be the first device, or may be a chip in the first device. The communication apparatus 20 may include components configured to perform the operations performed by the first device in the foregoing method embodiment. In addition, the components in the communication apparatus 20 are respectively configured to implement the operations performed by the first device in the foregoing method embodiment.

For example, the communication interface 21 is configured to: indicate a first transmission resource to a second device, and send first information to the second device on the first transmission resource.

Alternatively, the processor 22 is configured to determine a first transmission resource indicated by a second device, and the communication interface 21 is configured to send first information to the second device on the first transmission resource.

If the first device is a satellite and the second device is a ground station, the first information is telemetry information. Alternatively, if the first device is a ground station and the second device is a satellite, the first information is telecommand information.

Optionally, the communication interface 21 is further configured to receive second information sent by the second device, where the second information indicates the first transmission resource allocated by the second device to the first device.

The processor 22 is specifically configured to determine, based on the second information, the first transmission resource indicated by the second device.

Optionally, the second information is scrambled based on a radio network temporary identifier RNTI of the first device or based on an RNTI corresponding to the first information.

Optionally, the communication interface 21 is further configured to receive a first message sent by the second device, where the first message includes third information, and the third information indicates an access resource allocated by the second device to the first device.

The communication interface 21 is further configured to access the second device based on the access resource.

Optionally, the first message further includes a device identifier of the first device.

Optionally, the communication interface 21 is further configured to receive, on a target time-frequency resource, a second message sent by the second device, where the second message includes fourth information, and the fourth information indicates a time-frequency resource position at which the first message is located.

The communication interface 21 is further configured to receive, based on the fourth information, the first message sent by the second device.

Optionally, the target time-frequency resource is a time-frequency resource that is semi-statically allocated or is determined based on the RNTI of the first device.

Optionally, the communication interface 21 is further configured to send a third message to the second device, where the third message includes fifth information, and the fifth information indicates the first transmission resource allocated by the first device to the second device.

Optionally, the third message further includes a device identifier of the second device and/or information about a format of the first information.

Optionally, the communication interface 21 is further configured to send, on a target time-frequency resource, a fourth message to the second device, where the fourth message includes sixth information, and the sixth information indicates a time-frequency resource position at which the third message is located.

Optionally, the target time-frequency resource is a time-frequency resource that is semi-statically allocated or is determined based on an RNTI of the second device.

Optionally, the first information is encapsulated in a media access control packet data unit MAC PDU.

Optionally, the MAC PDU includes a MAC header and a MAC control element. The MAC header includes a logical channel identifier. A value of the logical channel identifier is a preset value, and the preset value indicates that the MAC control element includes the first information.

Optionally, the MAC header further includes indication information, the indication information indicates the format of the first information, and the format of the first information is associated with a length of a bit occupied by the first information.

Optionally, the first information is generated at a MAC layer of the first device, or is obtained by a MAC layer of the first device from a newly added logical channel, and the newly added logical channel is used to carry the first information.

Optionally, the first information is carried on a first transmission channel or a second transmission channel, the first transmission channel includes a downlink shared channel DL-SCH or an uplink shared channel UL-SCH, and the second transmission channel is a newly added transmission channel for transmitting the first information.

Optionally, the first information is carried on a first physical channel or a second physical channel, the first physical channel includes a physical uplink shared channel PUSCH or a physical downlink shared channel PDSCH, and the second physical channel is a newly added physical channel for transmitting the first information.

Optionally, the communication apparatus 20 may further include a memory. The memory may store program instructions, and the at least one processor 22 may read the program instructions stored in the memory and execute the program instructions.

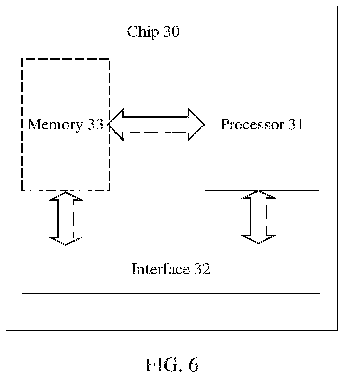

When the communication apparatus is a chip or a chip system, refer to a schematic diagram of a structure of the chip shown in FIG. 6. A chip 30 shown in FIG. 6 includes a processor 31 and an interface 32. There may be one or more processors 31, and there may be a plurality of interfaces 32. It should be noted that functions corresponding to the processor 31 and the interface 32 may be achieved through hardware design, software design, or a combination of software and hardware. This is not limited herein.

Optionally, the chip further includes a memory 33, and the memory 33 is configured to store necessary program instructions and data.

In this application, the processor 31 may be configured to: invoke, from the memory, an implementation program, in a first device or a second device, of an information transmission method provided in one or more embodiments of this application, and execute instructions included in the program. The interface 32 may be configured to output an execution result of the processor 31. In this application, the interface 32 may be specifically configured to output messages or information of the processor 31. For the information transmission method provided in one or more embodiments of this application, refer to the foregoing embodiments shown in FIG. 2. Details are not described herein again.

The processor in this embodiment of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

According to the method provided in this embodiment of this application, this application further provides a computer program product. The computer program product includes computer program code. When the computer program code is run on a computer, the computer is enabled to perform the method on the first device side or the second device side according to any one of the foregoing method embodiments.

In another embodiment of this application, a communication system is further provided. The communication system includes a first device and a second device. For example, the first device and the second device may be the first device and the second device provided in the embodiment in FIG. 2, and are configured to perform steps performed by corresponding network elements in the embodiment in FIG. 2.

This embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC) or another programmable logic device, a discrete gate or transistor logic device, a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. The processing apparatus may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed through a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that, in embodiments of this application, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and the method that are described in this specification is intended to include, but not limited to, these memories and any memory of another proper type.

All or some of the foregoing embodiments may be implemented by software, hardware, firmware, or any combination thereof. When software is used for implementation, all or some of the foregoing embodiments may be implemented in a form of computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium. (for example, a high-density digital video disc (digital video disc, DVD)), or a semiconductor medium (for example, a solid state disk (solid state disk, SSD)), or the like.

The access network device, the first network element, and the charging network element in the foregoing apparatus embodiments completely correspond to the access network device, the first network element, and the charging network element in the method embodiments. Corresponding modules or units perform corresponding steps. For example, a communication unit (transceiver) performs a receiving or sending step in the method embodiments, and a processing unit (processor) may perform other steps except sending and receiving. For a specific function of the unit, refer to the corresponding method embodiment. There may be one or more processors.

Terms such as "component", "module", and "system" used in this specification indicate computer-related entities, hardware, firmware, a combination of hardware and software, software, or software being executed. For example, a component may be but is not limited to a process that runs on a processor, a processor, an object, an executable file, a thread of execution, a program, or a computer. As illustrated by using figures, both a computing device and an application that is run on the computing device may be components. One or more components may reside within a process or an execution thread, and a component may be located on one computer or distributed between two or more computers. In addition, these components may be executed from various computer-readable media that store various data structures. For example, the components may communicate with a local or remote process and based on, for example, a signal having one or more data packets (for example, data from two components interacting with another component in a local system, a distributed system or across a network such as the internet interacting with other systems with the signal).

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, numbers "first", "second", and the like are merely used to distinguish between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element have a determining action during implementation, and do not mean any other limitation.

It should be further understood that in embodiments of this application, "B corresponding to A" represents that B is associated with A, or B may be determined based on A. However, it should be further understood that determining B based on A does not mean that B is determined based on only A, and B may alternatively be determined based on A and/or other information.

It should be further understood that the term "and/or" in this specification describes only an association relationship between associated objects and represents that three relationships may exist. For example, A and/or B may represent the following three cases: Only A exists, both A and B exist, and only B exists. In addition, the character "/" used in this specification usually indicates that there is an "or" relationship between associated objects.

Unless otherwise specified, an expression in this application like "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that, in embodiments of this application, the access network device, the first network element, and the charging device may perform some or all the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one location, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
indicating (S101), by a first device, a first transmission resource to a second device, and sending first information to the second device on the first transmission resource; or determining, by the first device, a first transmission resource indicated by the second device, and sending the first information to the second device on the first transmission resource, wherein the first transmission resource is a scheduled transmission resource;
and when the first device is a satellite and the second device is a ground station, the first information is telemetry information; or when the first device is a ground station and the second device is a satellite, the first information is telecommand information;
wherein before the determining, by the first device, a first transmission resource indicated by the second device, the method further comprises:
receiving, by the first device, second information sent by the second device, wherein the second information indicates the first transmission resource allocated by the second device to the first device; and
the determining, by the first device, a first transmission resource indicated by the second device comprises:
determining, by the first device based on the second information, the first transmission resource indicated by the second device;
**characterized in that** the second information is scrambled based on a radio network temporary identifier, RNTI, of the first device or based on an RNTI corresponding to the first information.

2. The method according to claim 1, wherein before the receiving, by the first device, second information sent by the second device, the method further comprises:
receiving, by the first device, a first message sent by the second device, wherein the first message comprises third information, and the third information indicates an access resource allocated by the second device to the first device; and
accessing, by the first device, the second device based on the access resource.

3. The method according to claim 2, wherein the first message further comprises a device identifier of the first device.

4. The method according to claim 2, wherein before the receiving, by the first device, a first message sent by the second device, the method further comprises:
receiving, by the first device on a target time-frequency resource, a second message sent by the second device, wherein the second message comprises fourth information, and the fourth information indicates a time-frequency resource position at which the first message is located; and
the receiving, by the first device, a first message sent by the second device comprises:
receiving, by the first device based on the fourth information, the first message sent by the second device.

5. The method according to claim 4, wherein the target time-frequency resource is a time-frequency resource that is semi-statically allocated or is determined based on the RNTI of the first device.

6. The method according to claim 1, wherein the indicating, by a first device, a first transmission resource to a second device comprises:
sending, by the first device, a third message to the second device, wherein the third message comprises fifth information, and the fifth information indicates the first transmission resource allocated by the first device to the second device.

7. The method according to claim 6, wherein the third message further comprises a device identifier of the second device and/or information about a format of the first information.

8. The method according to claim 6 or 7, wherein before the sending, by the first device, a third message to the second device, the method further comprises:
sending, by the first device on a target time-frequency resource, a fourth message to the second device, wherein the fourth message comprises sixth information, and the sixth information indicates a time-frequency resource position at which the third message is located.

9. The method according to claim 8, wherein the target time-frequency resource is a time-frequency resource that is semi-statically allocated or is determined based on an RNTI of the second device.

10. The method according to any one of claims 1 to 9, wherein the first information is encapsulated in a media access control packet data unit, MAC PDU.

11. A communication apparatus (10), comprising a module or a unit configured to perform the method according to any one of claims 1 to 10.

12. A computer-readable storage medium, wherein the computer-readable storage medium comprises a computer program or instructions; and when the computer program or the instructions are run on a computer, the computer is enabled to perform the method according to any one of claims 1 to 10.

13. A communication system, wherein the communication system comprises a first device and a second device, wherein
the first device is a satellite, and the second device is a ground station; or
the first device is a ground station, and the second device is a satellite; and
the first device is configured to perform the method according to any one of claims 1 to 10.

## Patentansprüche

1. Informationsübertragungsverfahren, das Folgendes umfasst:
Angeben (S101), durch ein erstes Gerät, einer ersten Übertragungsressource zu einem zweiten Gerät, und Senden von ersten Informationen an das zweite Gerät auf der ersten Übertragungsressource; oder Bestimmen, durch das erste Gerät, einer durch das zweite Gerät angegebenen ersten Übertragungsressource, und Senden der ersten Informationen an das zweite Gerät auf der ersten Übertragungsressource, wobei die erste Übertragungsressource eine geplante Übertragungsressource ist;
und wobei, wenn das erste Gerät ein Satellit ist und das zweite Gerät eine Bodenstation ist, die ersten Informationen Telemetrieinformationen sind; oder wenn das erste Gerät eine Bodenstation ist und das zweite Gerät ein Satellit ist, die ersten Informationen Fernsteuerungsinformationen sind;
wobei vor dem Bestimmen, durch das erste Gerät, einer durch das zweite Gerät angegebenen ersten Übertragungsressource das Verfahren ferner Folgendes umfasst:
Empfangen, durch das erste Gerät, von durch das zweite Gerät gesendeten zweiten Informationen, wobei die zweiten Informationen die durch das zweite Gerät dem ersten Gerät zugewiesene erste Übertragungsressource angeben; und
wobei das Bestimmen, durch das erste Gerät, einer durch das zweite Gerät angegebenen ersten Übertragungsressource Folgendes umfasst:
Bestimmen, durch das erste Gerät basierend auf den zweiten Informationen, der durch das zweite Gerät angegebenen ersten Übertragungsressource;
**dadurch gekennzeichnet, dass** die zweiten Informationen basierend auf einer temporären Funknetzkennung, RNTI, des ersten Geräts oder basierend auf einer den ersten Informationen entsprechenden RNTI verschlüsselt werden.

2. Verfahren nach Anspruch 1, wobei vor dem Empfangen, durch das erste Gerät, von durch das zweite Gerät gesendeten zweiten Informationen das Verfahren ferner Folgendes umfasst:
Empfangen, durch das erste Gerät, einer durch das zweite Gerät gesendeten ersten Nachricht, wobei die erste Nachricht dritte Informationen umfasst und die dritten Informationen eine durch das zweite Gerät dem ersten Gerät zugewiesene Zugriffsressource angeben; und
Zugreifen, durch das erste Gerät, auf das zweite Gerät basierend auf der Zugriffsressource.

3. Verfahren nach Anspruch 2, wobei die erste Nachricht ferner eine Gerätekennung des ersten Geräts umfasst.

4. Verfahren nach Anspruch 2, wobei vor dem Empfangen, durch das erste Gerät, einer durch das zweite Gerät gesendeten ersten Nachricht das Verfahren ferner Folgendes umfasst:
Empfangen, durch das erste Gerät auf einer Ziel-Zeit-Frequenz-Ressource, einer durch das zweite Gerät gesendeten zweiten Nachricht, wobei die zweite Nachricht vierte Informationen umfasst und die vierten Informationen eine Zeit-Frequenz-Ressourcenposition angeben, an der sich die erste Nachricht befindet; und
wobei das Empfangen, durch das erste Gerät, einer durch das zweite Gerät gesendeten ersten Nachricht Folgendes umfasst: Empfangen, durch das erste Gerät basierend auf den vierten Informationen, der durch das zweite Gerät gesendeten ersten Nachricht.

5. Verfahren nach Anspruch 4, wobei die Ziel-Zeit-Frequenz-Ressource eine Zeit-Frequenz-Ressource ist, die semistatisch zugewiesen oder basierend auf der RNTI des ersten Geräts bestimmt wird.

6. Verfahren nach Anspruch 1, wobei das Angeben, durch ein erstes Gerät, einer ersten Übertragungsressource zu einem zweiten Gerät Folgendes umfasst:
Senden, durch das erste Gerät, einer dritten Nachricht an das zweite Gerät, wobei die dritte Nachricht fünfte Informationen umfasst und die fünften Informationen die durch das erste Gerät dem zweiten Gerät zugewiesene erste Übertragungsressource angeben.

7. Verfahren nach Anspruch 6, wobei die dritte Nachricht ferner eine Gerätekennung des zweiten Geräts und/oder Informationen über ein Format der ersten Informationen umfasst.

8. Verfahren nach Anspruch 6 oder 7, wobei vor dem Senden, durch das erste Gerät, einer dritten Nachricht an das zweite Gerät das Verfahren ferner Folgendes umfasst:
Senden, durch das erste Gerät auf einer Ziel-Zeit-Frequenz-Ressource, einer vierten Nachricht an das zweite Gerät, wobei die vierte Nachricht sechste Informationen umfasst und die sechsten Informationen eine Zeit-Frequenz-Ressourcenposition angeben, an der sich die dritte Nachricht befindet.

9. Verfahren nach Anspruch 8, wobei die Ziel-Zeit-Frequenz-Ressource eine Zeit-Frequenz-Ressource ist, die semistatisch zugewiesen oder basierend auf einer RNTI des zweiten Geräts bestimmt wird.

10. Verfahren nach einem der Ansprüche 1 bis 9, wobei die ersten Informationen in einer Medienzugriffssteuerungspaketdateneinheit, MAC PDU, verkapselt werden.

11. Kommunikationsvorrichtung (10), die ein Modul oder eine Einheit umfasst, die dazu konfiguriert ist, das Verfahren nach einem der Ansprüche 1 bis 10 durchzuführen.

12. Computerlesbares Speichermedium, wobei das computerlesbare Speichermedium ein Computerprogramm oder Anweisungen umfasst; und wobei, wenn das Computerprogramm oder die Anweisung auf einem Computer ausgeführt werden, dem Computer ermöglicht wird, das Verfahren nach einem der Ansprüche 1 bis 10 durchzuführen.

13. Kommunikationssystem, wobei das Kommunikationssystem ein erstes Gerät und ein zweites Gerät umfasst, wobei
das erste Gerät ein Satellit ist und das zweite Gerät eine Bodenstation ist; oder
das erste Gerät eine Bodenstation ist und das zweite Gerät ein Satellit ist; und
das erste Gerät dazu konfiguriert ist, das Verfahren nach einem der Ansprüche 1 bis 10 durchzuführen.

## Revendications

1. Procédé de transmission d'informations, comprenant :
l'indication (S101), par un premier dispositif, d'une première ressource de transmission à un second dispositif, et l'envoi de premières informations, au second dispositif, sur la première ressource de transmission ; ou la détermination, par le premier dispositif, d'une première ressource de transmission indiquée par le second dispositif, et l'envoi des premières informations au second dispositif, sur la première ressource de transmission, dans lequel la première ressource de transmission est une ressource de transmission planifiée ;
et, lorsque le premier dispositif est un satellite et le second dispositif est une station au sol, les premières informations sont des informations de télémétrie ; ou, lorsque le premier dispositif est une station au sol et le second dispositif est un satellite, les premières informations sont des informations de télécommande ;
dans lequel, avant la détermination, par le premier dispositif, d'une première ressource de transmission indiquée par le second dispositif, le procédé comprend en outre :
la réception, par le premier dispositif, de deuxièmes informations envoyées par le second dispositif, dans lequel les deuxièmes informations indiquent la première ressource de transmission attribuée par le second dispositif au premier dispositif ; et
la détermination, par le premier dispositif, d'une première ressource de transmission indiquée par le second dispositif comprend :
la détermination, par le premier dispositif, sur la base des deuxièmes informations, de la première ressource de transmission indiquée par le second dispositif ;
**caractérisé en ce que** les deuxièmes informations sont embrouillées sur la base d'un identifiant temporaire de réseau radio (Radio Network Temporary Identifier, RNTI), du premier dispositif, ou sur la base d'un RNTI correspondant aux premières informations.

2. Procédé selon la revendication 1, dans lequel, avant la réception, par le premier dispositif, de deuxièmes informations envoyées par le second dispositif, le procédé comprend en outre :
la réception, par le premier dispositif, d'un premier message envoyé par le second dispositif, dans lequel le premier message comprend des troisièmes informations, et les troisièmes informations indiquent une ressource d'accès attribuée par le second dispositif au premier dispositif ; et
l'accès, par le premier dispositif, au second dispositif, sur la base de la ressource d'accès.

3. Procédé selon la revendication 2, dans lequel le premier message comprend en outre un identifiant de dispositif du premier dispositif.

4. Procédé selon la revendication 2, dans lequel, avant la réception, par le premier dispositif, d'un premier message envoyé par le second dispositif, le procédé comprend en outre :
la réception, par le premier dispositif, sur une ressource de temps-fréquence cible, d'un deuxième message envoyé par le second dispositif, dans lequel le deuxième message comprend des quatrièmes informations, et les quatrièmes informations indiquent une position de ressource de temps-fréquence à laquelle est situé le premier message ; et
la réception, par le premier dispositif, d'un premier message envoyé par le second dispositif comprend : la réception, par le premier dispositif, sur la base des quatrièmes informations, du premier message envoyé par le second dispositif.

5. Procédé selon la revendication 4, dans lequel la ressource de temps-fréquence cible est une ressource de temps-fréquence qui est semi-statiquement attribuée ou est déterminée sur la base du RNTI du premier dispositif.

6. Procédé selon la revendication 1, dans lequel l'indication, par un premier dispositif, d'une première ressource de transmission à un second dispositif comprend :
l'envoi, par le premier dispositif, d'un troisième message, au second dispositif, dans lequel le troisième message comprend des cinquièmes informations, et les cinquièmes informations indiquent la première ressource de transmission attribuée par le premier dispositif au second dispositif.

7. Procédé selon la revendication 6, dans lequel le troisième message comprend en outre un identifiant de dispositif du second dispositif et/ou des informations concernant un format des premières informations.

8. Procédé selon la revendication 6 ou 7, dans lequel, avant l'envoi, par le premier dispositif, d'un troisième message, au second dispositif, le procédé comprend en outre :
l'envoi, par le premier dispositif, sur une ressource de temps-fréquence cible, d'un quatrième message, au second dispositif, dans lequel le quatrième message comprend des sixièmes informations, et les sixièmes informations indiquent une position de ressource de temps-fréquence à laquelle est situé le troisième message.

9. Procédé selon la revendication 8, dans lequel la ressource de temps-fréquence cible est une ressource de temps-fréquence qui est semi-statiquement attribuée ou est déterminée sur la base d'un RNTI du second dispositif.

10. Procédé selon l'une quelconque des revendications 1 à 9, dans lequel les premières informations sont encapsulées dans une unité de données par paquets de contrôle d'accès au support (Media Access Control Packet Data Unit, MAC PDU).

11. Appareil de communication (10), comprenant un module ou une unité configuré(e) pour réaliser le procédé selon l'une quelconque des revendications 1 à 10.

12. Support de stockage lisible par ordinateur, dans lequel le support de stockage lisible par ordinateur comprend un programme d'ordinateur ou des instructions ; et, lorsque le programme d'ordinateur ou les instructions sont exécutés sur un ordinateur, l'ordinateur est en mesure de réaliser le procédé selon l'une quelconque des revendications 1 à 10.

13. Système de communication, dans lequel le système de communication comprend un premier dispositif et un second dispositif, dans lequel
le premier dispositif est un satellite, et le second dispositif est une station au sol ; ou
le premier dispositif est une station au sol, et le second dispositif est un satellite ; et
le premier dispositif est configuré pour réaliser le procédé selon l'une quelconque des revendications 1 à 10.
